# EUROPEAN PATENT APPLICATION

(11) **EP 4 641 380 A1**
(43) Date of publication of application: **29.10.2025**
(21) Application number: 25168893.3
(22) Date of filing: 07.04.2025
(51) Int. Cl.: G06F 9/48, G06F 9/455

(54) **VIRTUAL MACHINE MIGRATION USING SHARED MEMORY POOLING**

(30) Priority: 24.04.2024 US 202418644414
(71) Applicant: Microsoft Technology Licensing, LLC, Redmond, WA 98052 (US)
(72) Inventor: HODIGERE, Arun Venkatasubbaiah, Redmond, Washington, 98052 (US); GARG, Ankur, Redmond, Washington, 98052 (US); KOTARY, Karunakara, Redmond, Washington, 98052 (US); HARIDASS, Anand, Redmond, Washington, 98052 (US)
(74) Representative: CMS Cameron McKenna Nabarro Olswang LLP

(57) **Abstract**

A method of VM migration includes allocating a designated system memory for a guest VM on a target node and reserving a shared physical memory region on a transfer node that is part of a shared memory pool that is memory coherent and cache coherent with a source node and the target node. The VM system memory of the guest VM is re-mapped from a first physical memory region on a source node to the shared physical memory region on the transfer node and the system memory of the guest VM is copied from the first physical memory region on the source node to the shared physical memory region on the transfer node. The designated system memory on the target node is mapped to the shared physical memory region on the transfer node; the guest VM is stopped on the source node and then resumed on the target node.

## Description

### BACKGROUND

Cloud compute platforms offer compute services that are often hosted by virtual machines (VMs) executed on servers at cloud-based data centers. When configured for this purpose, multiple different server nodes may reside in close physical proximity, such is in a same rack or nearby racks in a same data center, each hosting one or more virtual machines (VMs). Over time, a physical server node can begin to accumulate errors and encounter performance degradation issues for various reasons including memory failures and memory allocation inefficiencies. In these scenarios, it is common to migrate one or all VMs hosted by the physical server node to other (e.g., better-performing) server node(s). Migration is performed without notifying the end customer and often while customer workloads are running.

In a common VM migration scenario, all VM data is moved directly from a source node to a target node. During the initial phase of migration, referred to as "brown-out", the source node begins copies the VM data, including source memory of the guest VM, to the target node. If the source memory is copied while the end customer is using the VM to execute a heavy workload, the workload may be rapidly refreshing VM pages of the source memory on the source node as the source node is trying to copy those pages to the target node. This can sometimes result in intensive input/output (I/O) operations that cause noticeable latencies in the customer workload. Eventually, a "black-out" phase of the VM migration is entered when the guest VM is stopped at the source node. During the black-out phase, the final remaining dirty pages of VM source memory are copied to the target node, and the guest VM is subsequently resumed at the target node. During the black-out phase, the guest VM is completely offline and customer workloads are stopped. To ensure minimal customer disruption and latencies, it is desirable to mitigate the length of the black-out and brown-out phases of VM migration.

### SUMMARY

According to one implementation, a method of transferring a guest virtual machine (VM) from a source node to a target node comprises: allocating a set of resources on the target node that are to be used by the guest VM. The set of resources include at least a designated system memory for the guest VM. The method further comprises: reserving a shared physical memory region on a transfer node that is to facilitate transfer of the guest VM from the source node to the target node, the shared physical memory region being part of a shared memory pool that is memory coherent and cache coherent with both the source node and the target node. The method still further comprises: re-mapping VM system memory of the guest VM from a first physical memory region on the source node to the shared physical memory region on the transfer node while the guest VM is running on the source and, subsequent to the re-mapping, copying system memory of the guest VM from the first physical memory region on the source node to the shared physical memory region on the transfer node. Finally, the designated system memory on the target node is mapped to the shared physical memory region on the transfer node, and the guest VM is stopped on the source node and resumed on the target node.

A method of VM migration includes allocating a designated system memory for a guest VM on a target node and reserving a shared physical memory region on a transfer node that is part of a shared memory pool that is memory coherent and cache coherent with a source node and the target node. The VM system memory of the guest VM is re-mapped from a first physical memory region on a source node to the shared physical memory region on the transfer node and the system memory of the guest VM is copied from the first physical memory region on the source node to the shared physical memory region on the transfer node. The designated system memory on the target node is mapped to the shared physical memory region on the transfer node; the guest VM is stopped on the source node and then resumed on the target node.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Other implementations are also described and recited herein.

### BRIEF DESCRIPTION OF THE DRAWINGS

FIG. 1 illustrates an example system for inter-node virtual machine (VM) migration using a shared memory pooling.
FIG. 2A illustrates operations of another example system that performs inter-node VM migration using shared memory pooling.
FIG. 2B illustrates additional example operation in the system following the operations described above with respect to FIG. 2A.
FIG. 3 illustrates an example flow diagram of operations to affect an inter-node VM migration using shared memory pooling.
FIG. 4 illustrates an example flow diagram illustrating an alternative sequence of operations to affect an inter-node VM migration using shared memory pooling.
FIG. 5 illustrates an example schematic of a processing device suitable for implementing aspects of the disclosed technology.

### DETAILED DESCRIPTION

The herein disclosed technology includes systems and methods for low latency (low-disruption) virtual machine (VM) migration between different server nodes at a data center. The disclosed systems and methods for VM migration leverage use of a shared memory pool that is stored on a system node referred to herein as a "transfer node." The transfer node includes a multi-port/switch controller and a high-speed coherent data interface that is, for reasons discussed herein, capable of transferring data between a source node and a target node faster than the source node and the target node are capable of transmitting data directly to one another. The shared memory pool on the transfer node is both cache and memory coherent with the source node and the target node. This means that either the source node or the target node can run the guest VM while the source memory of the VM resides in the shared memory pool while also guaranteeing that interim writes to the source memory of the VM (e.g., by either the source node or the target node) occur sequentially.

According to one implementation, VM migration entails temporarily utilizing the shared memory pool on the transfer node to store VM source memory as it is being migrated from the source node to the target node. Due to features of the coherent high-speed interface, the VM source memory reaches the shared memory pool more quickly than a traditional transfer between host nodes. Further, because the shared memory staging region is both cache and memory coherent with the source node and target node, the target node has immediate visibility to the VM source memory in the shared memory staging area, and guest VM can be resumed without waiting for the VM source memory to reach local memory on the target node. This significantly reduces the length of both the brown-out and black-out phases of VM migration.

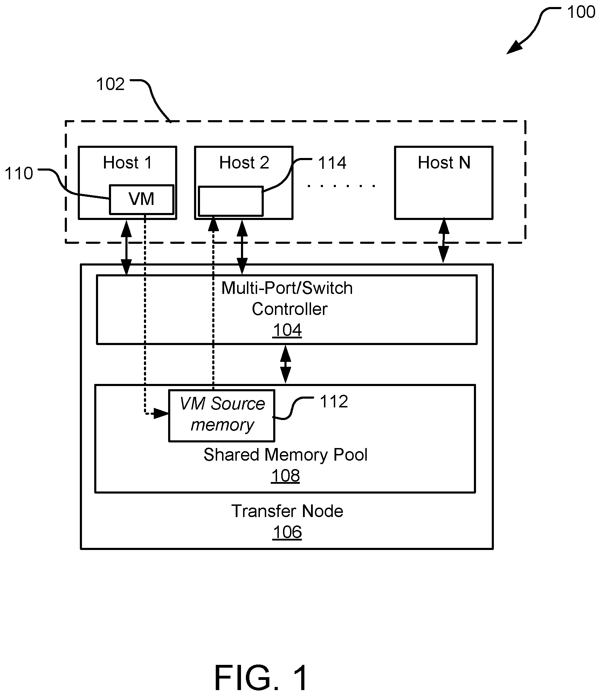

FIG. 1 illustrates an example system 100 for inter-node virtual machine (VM) migration using a shared memory pooling. The system 100 includes multiple host nodes 102 (Host 1, Host 2, ... Host N) which are to be understood as different processing devices, such as servers at a data center. The host nodes 102 are each physically coupled, using coherent links, via multi-port/switch controller 104, to a transfer node 106 that includes a shared memory pool 108. In addition to the shared memory pool 108, the transfer node 106 includes a local controller (e.g., a processor and firmware) that manages high-speed communications through the multi-port/switch controller 104 and that provides peripheral devices (e.g., the host nodes 102) with coherent memory pooling within the shared memory pool 108. As used herein, coherent memory pooling refers to memory sharing (memory coherence) with cache coherence.

The transfer node 106 is physical device separate from the host nodes 102 that resides in the same general physical location (e.g., facility) as the host nodes 102. In one implementation, the transfer node 106 is on a same physical rack in a data center as the host nodes 102. For example, the transfer node 106 is on the same rack as the nodes that serve as source and target for a VM migration that relies on the shared memory pool 108 per the herein-described methodology. In another implementation, the transfer node 106 resides in a same cluster of servers as the host nodes 102 but not necessarily in the same rack as the source and target nodes that utilize the shared memory pool 108 of the transfer node 106 during a VM migration. As used, herein "cluster" refers to two or more racks in close physical proximity that can be wired together. For example, the transfer node 106 is located on a different rack as some or all of the host nodes 102 but the racks are in close enough physical proximity to facility physical coupling between the transfer node 106 and the host nodes 102 through the multi-port/switch controller 104.

The host nodes 102 each operate to host one or multiple virtual machines (VMs) that are customer-configured to perform workloads submitted by and behalf of end customers (e.g., tenants to a cloud service platform). In the example, shown, a VM 110 is illustrated executing on Host 1. Although not shown, the VM 110 may be one of many other VMs also executing on Host 1 (e.g., on behalf of the same or different end customers). Over time, Host 1 may begin to experience performance degradation such as increased errors and/or slow-down due to hardware aging, memory allocation problems, component failures, or other issues. When performance of Host 1 drops below a threshold or satisfies predefined criteria, the system 100 may initiate migration of the VM 110 from Host 1 to another host in the same data center rack or a same cluster.

Once the system initiates migration of the VM 110 away from Host 1, referred to below as the "source node," a target node is chosen to receive and assume control of the VM 110. In the example shown, Host 2 is selected as the target node. In response to the identification and selection of Host 2 as the target node, the system 100 reserves resource on the target node for the VM 110. Specifically, a hypervisor on the target node (Host 2) is asked to allocate a new compute host, allocate local disk space on the target node for new VM to use, and to allocate memory (e.g., DRAM) that is to serve as a source memory (e.g., working memory) of the new VM. This newly-allocated memory is shown in FIG. 1 as allocated memory 114. Notably, allocated memory 114 is defined by a set of logical addresses that are mapped, by the hypervisor of Host 2, to a physical memory space - e.g., local memory within the target node (Host 2) or elsewhere, as is discussed further below. Ultimately, a VM using the allocated memory 114 is unaware of the mapping and utilizes the logical addresses to access data stored in the allocated memory 114. In addition to reserving these resources on the target, a reserved region 112 of the shared memory pool 108 is reserved to assist in the VM migration.

Following the above-described resource allocation, a VM data migration phase commences when the source node (Host 1) re-maps source memory of the VM 110 to the reserved region 112 in the shared memory pool 108 and then begins copying data of the source memory for the VM 110 from the source node (Host 1) to the reserved region 112 in the shared memory pool 108. Because Host 1 is both memory and cache coherent with the shared memory pool 108, the source node is capable of reading to and writing from the reserved region 112 as if the shared memory pool 108 is local memory. In one implementation, the multi-port/switch controller 104 provides a high-speed interface that facilitates transfer to/from the shared memory pool 108 without time-consuming data packaging operations performed in typical host-to-host communications, such as communication conducted via InfiniBand or Ethernet.

The target node (Host 2) is provided with access to the source memory of the VM 110 by mapping (e.g., via either a re-mapping or initial mapping) of the allocated memory 114 to the reserved region 112 that stores the VM source memory. Since the target node (Host 2) is also memory and cache coherent with the reserved region 112, the target node acquires access to the VM source memory with similar accelerated timeline as that described above. Following this remapping, the VM 110 can be stopped on the source node (Host 1) and resumed on the target node (Host 2) while the source memory for the VM 110 continues to reside on the transfer node 106. By making the destination for the VM source a memory coherent memory operation, the need to move the VM source memory to the target node during the migration process is substantially eliminated - thus, the most time-consuming portion of the VM migration no longer needs to occur during the migration (e.g., before the VM 110 is brought back online on the target VM). Instead, the target node (Host 2) can resume control and operations of the VM 110 while the VM source memory continues to physically reside in the reserved region 112 of the shared memory pool 108 without any functional difference from the operation of the VM itself or impact to the end user.

In some implementations, the VM source memory is retained indefinitely in the reserved region 112. This is, for example, advantageous in systems with limited host memory because it allows VM transfers to occur to target nodes that otherwise lack adequate VM memory resources. In other implementations, the VM source memory is copied from the reserved region 112 to local memory on the target node (Host 2) as a background operation conducted while the VM 110 is online on the target node and without interfering with (slowing down) customer workloads being performed by the VM 110.

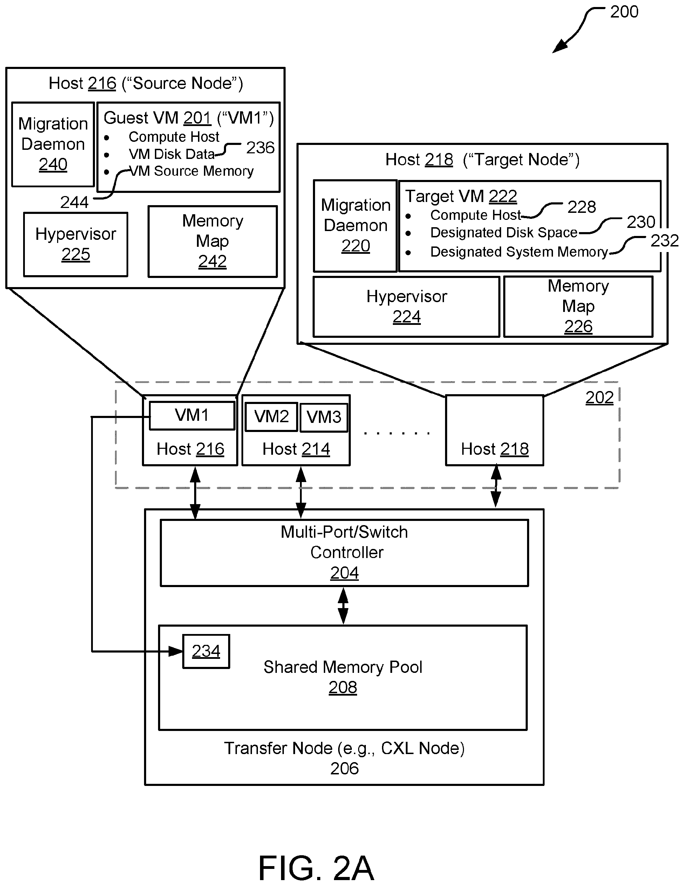

FIG. 2A illustrates operations of another example system 200 that performs inter-node VM migration using shared memory pooling. The system 200 includes multiple host nodes 202 (Host 1, Host 2, . . . Host N) that are each physically coupled, via multi-port/switch controller 204, to a transfer node 206 that includes a shared memory pool 208.

The transfer node 206 manages high-speed communications through the multi-port/switch controller 204 and provides peripheral devices (e.g., the host nodes 202) with coherent memory to the shared memory pool 208. In one implementation, the transfer node 206 is a node that utilizes compute express link (CXL) protocol, which is an open standard for high-speed, high-capacity CPU-to-device and CPU-to-memory connection. CXL is built in the serial PCI Express (PCIe) interface and further includes protocols that allow the host nodes 202 (and respective virtual machines and/or containers executing on the host nodes 202) to load/store from the shared memory pool in a cache-coherent manner (e.g., without corruption or inconsistencies) while minimizing CPU involvement and redundant movement between components. Notably, the CXL protocol is just one example protocol suitable for implementing the functionality of the transfer node 206. It is contemplated that other (e.g., future-developed) protocols that provide coherent memory pooling could likewise be used to implement the herein disclosed technology.

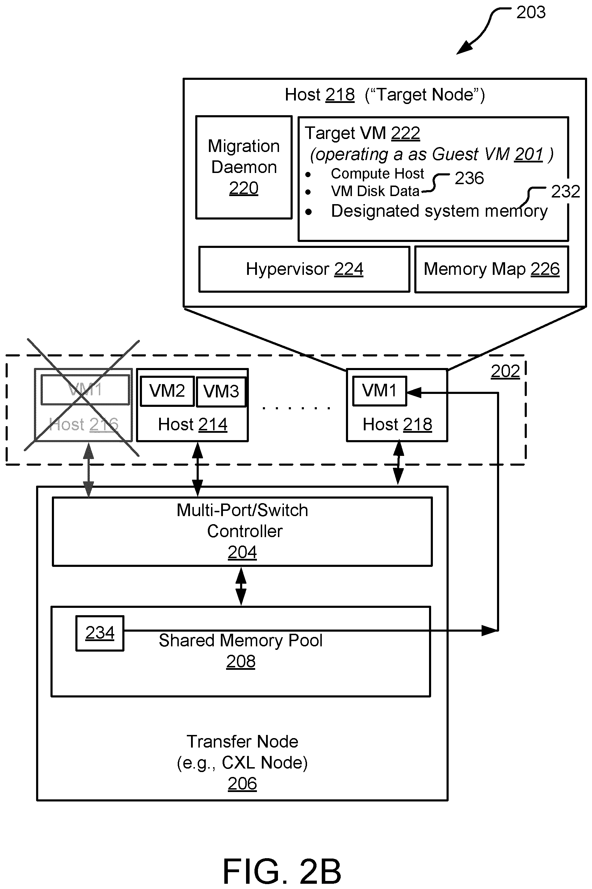

Components and functionality of the transfer node 206 and the host nodes 202 not explicitly described below with respect to FIG. 2 can be assumed the same or similar the components and functionality of other like-named components described herein.

In FIG. 2A, the host nodes 202 are shown to include a host 216 executing a guest virtual machine 201 (named "VM1"), a host 214 executing additional guest VMs named "VM2" and "VM3," and a host 218 that is not executing any virtual machines.

In the illustrated example, it is assumed that the system 200 has initiated a process to migrate the guest VM 201 to a new host. In various implementations, VM migration can be initiated by different triggers. In one implementation, various processing nodes in the system 200 (e.g., the host nodes 202 and/or other in a same data center) execute control plane software components that initiate VM migrations in response to certain triggers, such as to migrate VMs away from nodes exhibiting poor health and/or poor performance. In another implementation, VM migrations are initiated manually, such as by a system administrator (e.g., by sending a control command) in preparation to retire and/or replace old servers.

When the VM migration is initiated for the guest VM 201, the system 200 takes action to identify a target node to receive data of the guest VM 201 and to serve as a new host for the guest VM 201. In FIG. 2A, the host 218 has been selected as the target node. Target node selection is, in one implementation, a function of a data center control plane. In another implementation, nodes within the system 200 select the target node via a sequence of peer-to-peer communications. For example, the nodes 202 communicate with one another to identify a select node that has sufficient local resources to host the guest VM 201.

One the host 218 is selected as the target node for the migration of the guest VM 201, the system 200 allocates resources on the host 218 in preparation for the migration. In one implementation, a control plane of the system 200 instructs a migration daemon 220 executing locally on the target node (host 218) to perform certain resource allocation operations. In response, the migration daemon 220 instructs a hypervisor 224 to allocate resources to a target VM 222 including a compute host 228, designated designated disk space 230, and a designated system memory 232 (e.g., DRAM) that is to receive and store the source memory of VM that is being migrated.

The designated system memory 232 is characterized by a set of logical addresses that are mapped, in memory map 226, to a set of physical addresses. The memory map 226 is accessible to the hypervisor 224 and the migration daemon 220; however, the compute host 228 of the target VM 222 is aware only of the logical address mapped to the designated system memory 232 and has no access to the memory map 226.

In addition to allocating resource on the target node (host 218), the system 200 also reserves a shared physical memory region 234 within a shared memory pool 208 of the transfer node 206.The shared physical memory region 234 functions to facilitate the VM migration by receiving and temporarily storing source memory of the VM being migrated (VM1 in the illustrated example).

Following the above-described resource allocation operations, a migration daemon 240 executing on the source node (host 216) initiates a data migration phase of the VM migration. During the data migration phase, user data (VM disk data 236) is copied from non-volatile storage on the source node (host 216) to the designated disk space 230 on the target node (host 218). Additionally, the migration daemon 240 takes control of a local memory map 242 from hypervisor 225 and remaps the logical addresses used to store source memory of the guest VM 201 ("VM source memory 244") to physical addresses within the shared physical memory region 234 of the transfer node 206. As used herein, "VM source memory" refers to system memory of a guest VM (e.g., the guest VM being migrated) comprising the data that is loaded into volatile memory in order to run the guest VM.

As a result of the remapping of the VM source memory 244 to the shared physical memory region 234, all new incoming writes directed to the VM source memory hit the CPU cache of the host 216 and are subsequently executed on physical locations in the shared physical memory region 234.

Following the above-described re-mapping of the VM source memory 244, the migration daemon 240 begin copying the VM source memory 244 over the to the shared physical memory region 234. Due to cache coherency protocols implemented by the transfer node 206, it is guaranteed that any incoming writes to the VM source memory 244 are, during this time, sequentially executed - meaning, the newly-received writes to the VM system memory 244 are guaranteed to replace the older (stale) data in the shared physical memory region 234 even if that older data has not yet finished copying over at the time the new writes are received.

Traditionally, the term "dirty pages" is used to refer to memory pages that are refreshed by user writes while being copied from one node to another. In a traditional VM migration scenario, each page of source memory that is dirtied (e.g., refreshed/updated) while the source memory is being migrated has to be copied again, prolonging the duration of the migration and increasing latency during heavy user workloads. However, due to the above-described usage of coherent memory pooling in the system 200, memory pages that are dirtied during the copy of the VM source memory 244 are briefly cached (e.g., in a CPU cache of the source node) and subsequently written directly to the shared physical memory region 234, without ever hitting main memory on the source node. This practice eliminates the need to then perform additional I/O on the source node (e.g., and time-consuming data packet packaging to USB or ethernet) to then transfer these "dirty" pages to working memory of an external node. This significantly reduces the length of the traditional "brown out" phase (e.g., the phase of data migration while the guest VM remains online at the source node) as well as the heavy I/O that occurs traditionally if/when brownout occurs while the guest VM 201 is performing a heavy workload. Consequently, total brown-out period is shorter and the end user of the guest VM 201 is less likely to notice latencies during the brown-out period.

Once the VM source memory 244 has been re-mapped to the shared physical memory region 234 as described above, the shared physical memory region 234 can become the new working physical memory for guest VM 201 regardless of whether the guest VM 201 is being run on the source VM (host 216) or on the target node (host 218). In one implementation, the migration daemon 220 on the target node (host 218) receives notification of the remapping, such as by control plane components of the data center (not shown) and, in response, updates the memory map 226 on the host 218 to map the logical addresses of the designated system memory 232 to the shared physical memory region 234. Per this coherent memory operation, the target VM 222 is given immediate access to the VM source memory 244. Thus, the target node (host 218) can, upon receipt of a VM-start instruction, resume control of the VM source memory 244 as if it is stored locally on the host 218 without need to perform any further I/O operation.

FIG. 2B illustrates additional example operations 203 in the system 200 following the operations described above with respect to FIG. 2A. At the point in time illustrated by the operations 203, the VM source memory 244 has been copied from the source node (host 216) the shared physical memory region 234 and the memory map 226 of the target node (host 218) has been updated to map the designated system memory of the newly created target VM to an identical range of addresses within the shared physical memory region.

Once both the VM source memory 244 and the and the designated system memory 232 have been re-mapped to the shared physical memory region 234, the guest VM 201 can be stopped on the source node (host 216) and resumed on the target node (host 218). In some implementations, the entire source node is taken offline at this time (as shown in FIG. 2B), such as for retirement, reformatting. Notably, the time lapse between VM stop-time on the source node and VM start time on the target node is traditionally referred to as the "blackout" period because the end user loses access to the guest VM 201 during this time. In a traditional VM migration scenario, final data transfers of dirty source memory pages occur during the blackout period. However, since there are no remaining dirty memory pages at data locations external to the shared physical memory region 234 (which is mapped to the designated system memory 232 of the target VM 222), the guest VM 201 can be stopped on the source node and resumed on the target node in a substantially concurrent manner - e.g., within tens of ms of one another. This reduces the total span of the blackout period to near-zero.

Following restoration of network to the guest VM 201 on the target node (host 218), the VM source memory 244 is, in some implementations, copied from the shared physical memory region 234 to a local memory region, such as local DRAM, on the target node (host 218). Following this copying, and after the CPU cache of the target node is warmed (e.g., loaded with frequently accessed content), the designated system memory 232 of the target VM 222 (which is now running the guest VM 201) can be remapped to the local memory region on the host 218 that is now storing the VM source memory 244.

In other implementations, VM source memory 244 resides indefinitely in the shared physical memory region 234 throughout future operations of the guest VM 201 even after connectivity is restored to the guest VM 201 on the target node. This practice is beneficial in data systems that have limited memory since it eliminates the need for memory to be allocated to support the guest VM on the target node.

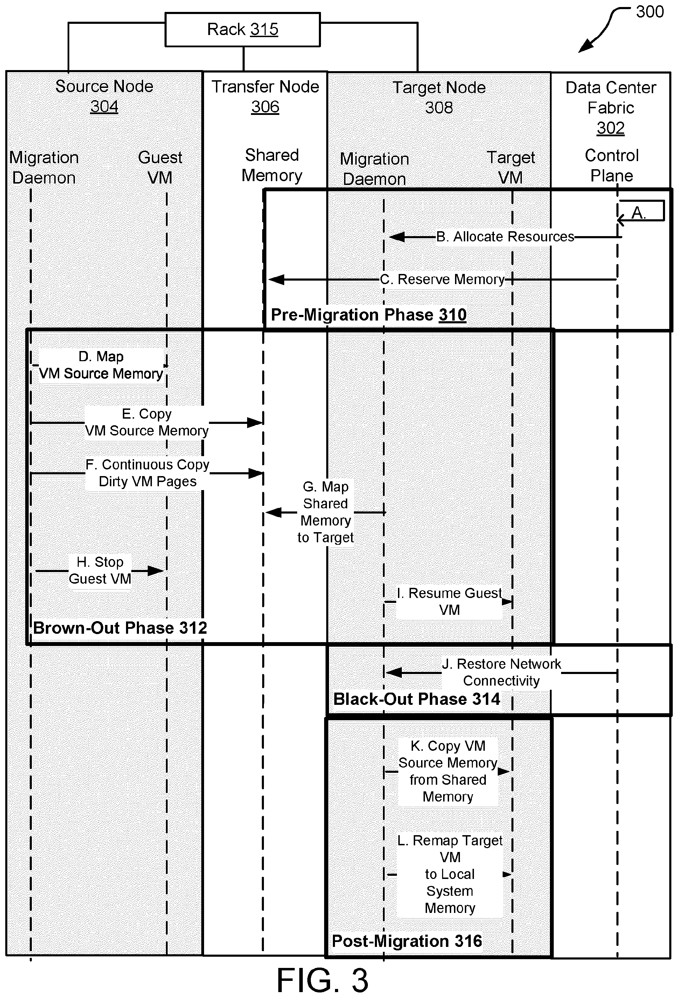

FIG. 3 illustrates an example flow diagram 300 of operations to affect an inter-node VM migration using shared memory pooling. In the example of FIG. 3, a VM migration process is initiated and controlled by a data center fabric 302, which can be understood as a collection of software components that execute on various processing nodes at a data center to monitor telemetry and health and to initiate and oversee various control plane operations. The illustrated VM migration process begins at step "A" (top right) in the flow. During step A, the data center fabric 302 determines that a guest VM is to be migrated away from a source node 304. This determination is, for example, made in response to determining that the source node 304 is in poor health and about to go down or in response to detecting higher-than usual latencies in I/O of a workload on the source node 304.

In response to determining that the guest VM is to be migrated, the data center fabric 302 commences a pre-migration phase 310 to ready the system for the VM migration. During the pre-migration phase 310, the data center fabric 302 identifies a spare node, referred to in the following description as the "target node 308." The target node 308 is in a same rack 315 as the source node 304 and is either empty (unused) or has sufficient available resources to support a new VM. For example, the spare node has ample unused disk storage and is currently running at a low CPU utilization rate as compared to the source node 304.

Next, at step B, the data center fabric 302 instructs a migration daemon on the target node 308 to allocate certain resources for the guest VM including a compute host, disk storage for storing the VM and user data, and a designated logical memory space for storing system memory. This collection of newly-allocated resources is referred to below as the "Target VM."

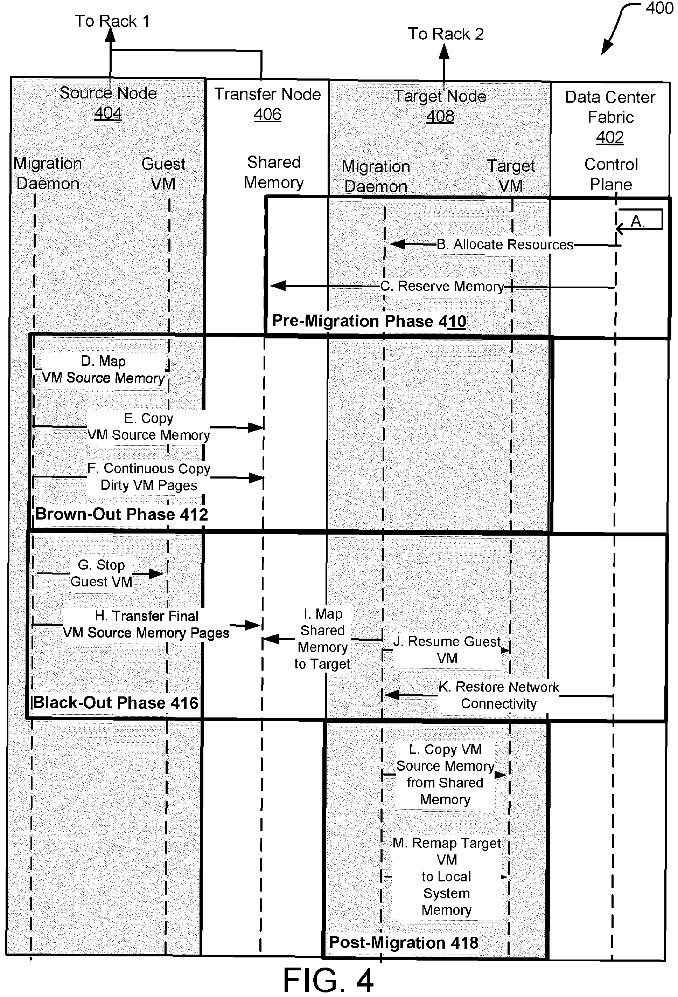

During step C, the data center fabric 302 submits a request for a memory region allocation from a shared memory pool that reside on a transfer node 306. The transfer node 306 provides coherent memory pooling to the source node 304 and the target node 308 and otherwise has features the same or similar to those described with respect to the transfer nodes of FIG. 1 and FIG. 2. In example of FIG. 3, the transfer node 306 resides in the same rack 315 as the target node 308 and the source node 304. Although this is not a requirement in all implementations (see, e.g., FIG. 4 below), this co-location within the same rack ensures the VM migration spans a minimal time period since the source node 304 and the target node 308 can each read to and write from the shared memory pool of the transfer node 306 nearly instantaneously (e.g., with the same speed as which the source node 304 and target node 308 can access their own local memories) and without delay that might otherwise be imparted by transmitting source memory of the guest VM along long lengths of cables to other racks.

Following the above-described operations of the pre-migration phase 310, the data center fabric 302 commences a "brown-out phase 312" in which migration begins while the guest VM remains online on the source node 304. Although not shown in FIG. 3, it is assumed that the data center fabric 302 orchestrates steps D-I by instructing the start of operations performed by different components, either in response to detecting completion of the previous operation or according to other predetermined timing.

At step "D", the migration daemon on the source node 304 re-maps system memory of the guest VM ("VM system memory") to the region in the shared memory pool that was reserved in the prior operation (e.g., at step C). This reserved shared memory region on the transfer node 306 is referred to as the reserved shared memory region in the following description. To accomplish the re-mapping of the VM system memory, the migration daemon takes control of pages tables (also sometimes referred to as redirection tables) traditionally managed by a hypervisor on the source node 304. These pages tables translate the virtual memory map of the source node 304 to physical memory locations.

During step E, the migration daemon on the source node 304 begins copying the VM source memory to the reserved shared memory region. In one implementation where this copying occurs between DRAM of the source node 304 and CXL device memory of the transfer node 306, the latency involved is substantially equal to the CXL link latency, which is on the order of milliseconds. In contrast to this, typical network latency involved in transfer data between physical nodes is on the order of seconds.

At step F, the migration daemon on the source node 304 begins copying the VM source memory over to the physical shared memory region. Due to the remapping at step E, all incoming writes to the guest VM that occur during step F hit the local cache of the source node 304 and are recognized as "dirty" by the migration daemon (e.g., newer than corresponding pages pending transfer to the shared physical memory region). These dirty pages are continuously copied, at step F, over to the shared physical memory region without ever being written to main memory on the source node 304.

At step G, the migration daemon on the target node 308 re-maps designated system memory of the target VM on the target node 308 to a common address range within the shared physical memory region that now stores the VM source memory.

Due to cache coherency enforced with respect to the shared physical memory region across both the source node 304 and the target node 308, the target node 308 has immediate continuous visibility of all dirty pages of the VM source memory that are received in the local write cache of the source node. Therefore, the target node 308 has full visibility into the newest copy of the VM source memory even while steps E and/or F are ongoing. As a result, it is not necessary to wait for any data transfers to complete following step G before the guest VM can be stopped on the source node 304 (shown by step H) and resumed on the target node 308 (shown by step I). In one implementation, step H and step I are performed substantially concurrently. In this case, a black-out phase 314 extends only for a brief second of time between the time that the guest VM is resumed at step I and the time that the data center fabric 302 restores network connectivity to the guest VM on the target node 308, which occurs at step J. According to one implementation, the full duration of the black-out phase 314 is on the order of tens of milliseconds as compared to several seconds (e.g., 5-10 seconds) on average in implementations that do not make use of coherent memory pooling.

Once connectivity is restored to the guest VM at step J, the black-out phase 314 is complete. In some implementations, the VM migration operations end at step J - that is, the guest VM continues to access the VM source memory in the shared physical memory region indefinitely while running on the target node 308. Leveraging this capability may allow for a reduction in hardware costs currently incurred by data centers that routinely overprovision storage nodes with enough system memory (DRAM) to support unplanned VM migrations.

In still other implementations, a post-migration phase 316 commences with step K, which provides for copying the VM source memory from the shared physical storage region to local memory (e.g., DRAM) on the target node 308. After the target VM has warmed-up its local system memory and CPU caches (e.g., populated them with frequently accessed data), the migration daemon on the target node 308 can then perform step L, which provides for remapping the logical addresses defining the source memory of the target VM from the shared physical storage region to the local memory on the target node 308 that stores the VM source memory following operation K.

FIG. 4 illustrates an example flow diagram 400 illustrating an alternative sequence of operations to affect an inter-node VM migration using shared memory pooling. In contrast to the operations of FIG. 3, which are designed to mitigate VM migration time when both the source node and target node are located in a same rack, the operations of FIG. 4 support VM migrations between host nodes in different racks of a same cluster. In this example, it is assumed that a source node 404 and a target node 408 are in different racks at a data center, but still in close enough physical proximity to facilitate coupling to one another via cabling.

Like the systems described above, the VM migration is, in FIG. 4, achieved by temporarily storing VM source memory in a shared physical memory region of a transfer node 406. In the operations described below, it is assumed that the transfer node 406 is on a same rack as the source node 404 and that the target node 408 is on a different rack in the same cluster. In other implementations, the transfer node 406 is located on the same rack as the target node 408 rack than the source node 404.

In FIG. 4, a pre-migration phase 410 includes steps A-C, which are identical to those described above with respect to steps A-C of FIG. 3 (e.g., selection of the target node and allocation of resources for the target VM and the shared memory region that will be used during the VM migration).

Following the pre-migration phase 410, a brown-out phase 412 commences and the data center fabric 402 instructs a migration daemon of the source node 404 to commence step D, which provides for re-mapping system memory of the guest VM being migrated ("VM system memory") to a reserved shared physical region in the shared memory pool of the transfer node 406 that was reserved in the prior operation (e.g., at step C). Following the remapping of step D, the migration daemon begins copying the VM source memory to the reserved shared memory region, as shown by step E. As this copying is in-progress, the migration daemon tracks dirty memory pages (pages of the source memory that are updated in the CPU cache of the source node 404 while step E is in progress) and continuously copies these pages to the shared memory region, as shown by step F.

Following step F, the operations of FIG. 4 diverge from those described above with respect to FIG. 3. When the source node 404, transfer node 406, and target node 408 are all co-located on a same rack (as in the previously-described implementation of FIG. 3), the target VM is provided with immediate visibility to the complete VM source memory, including cached dirty pages, as soon as its designated source memory address range is remapped to the shared physical memory region on the transfer node 406. However, in illustrated scenario where the target node 408 is on a different rack than the transfer node 406 and the source node 404, the target VM may experience some delay in synchronizing its CPU memory with the memory of the source node 404. Consequently, if the target VM loads its CPU cache with VM source memory from the shared physical memory region while the guest VM is still active on the source node 404, there may exist dirty pages of the VM source memory in the cache of the source node 404 that reach the shared physical memory region after the VM source memory is loaded from this region into the CPU cache on the target node 408 (e.g., due to transit along inter-rack cable). For this reason, it may be desirable to not bring the guest VM online on the target node 408 until it is guaranteed that all of the VM source memory has finished transferring - meaning, until after it is guaranteed that there are no remaining dirty source memory pages in the CPU cache of the source node 404. This ensures that the target node will, upon initialization, load its CPU cache with the most current version of the VM source data.

In light of the above, the brown-out phase 412 terminates following step F and a more traditional black-out phase 416 is entered, including steps G-K. At step G, the guest VM is stopped. At step H, the migration daemon the source node 404 transfers the final dirty pages of the VM source memory that reside in its CPU cache. At step I, a migration daemon on the target node 408 maps the designated source memory region of the target VM to the shared physical memory region of the transfer node (e.g., the physical address range currently storing the VM source memory of the guest VM).

At step J, the guest VM is resumed on the target node 408. Notably, step J is guaranteed (e.g., by the data center fabric 402) to be performed after termination of step H - meaning, it is guaranteed that all dirty pages of the VM source memory have been transferred to the shared physical memory region before the guest VM boots up and loads its local write cache from the shared physical memory region. Finally, at step K, the data center fabric 402 restore network connectivity to the target node 408, signaling the end of the black-out phase.

Notably, the black-out phase 416 of FIG. 4 spans a longer end-to-end time than the black-out phase 314 of FIG. 3 since the guest VM is not resumed on the target node 408 until after completion of the source memory transfer and all dirty memory pages. Even so, the operations of FIG. 4 still provide for a shorter total brown-out phase and a shorter total black-out phase than currently-practice VM migration methodologies that do not utilize coherent memory pooling. This time savings is attributable to the time that is saved by *not* packaging the VM data per traditional node-to-node transfer protocols (e.g., InfiniBand or ethernet protocols).

Following the black-out phase 415, a post-migration phase 418 commences and steps L and M are executed identically to the post-migration operations described above with respect to FIG. 3.

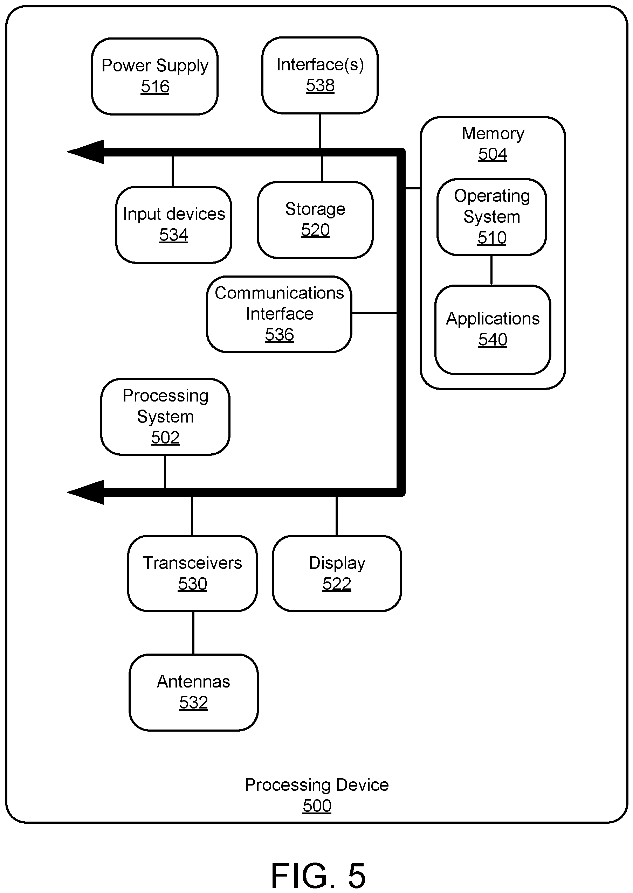

FIG. 5 illustrates an example schematic of a processing device 500 suitable for implementing aspects of the disclosed technology. The processing device 500 includes a processing system 502, memory 504, a display 522, and other interfaces 538 (e.g., buttons). The processing system 502 may each one or more computer processing units (CPUs), graphics processing units (GPUs), etc.

The memory 504 generally includes both volatile memory (e.g., random access memory (RAM)) and non-volatile memory (e.g., flash memory). An operating system 510 resides in the memory 504 and is executed by the processing system 502. One or more applications 540 and other data (e.g., VM source memory) are loaded in the memory 504 and executed on the operating system 510 by the processing system 502. The applications 540 may receive inputs from one another as well as from various input local devices 534 such as a microphone, input accessory (e.g., keypad, mouse, stylus, touchpad, gamepad, racing wheel, joystick), or a camera.

Additionally, the applications 540 may receive input from one or more remote devices, such as remotely-located servers or smart devices, by communicating with such devices over a wired or wireless network using more communication transceivers 530 and an antenna 432 to provide network connectivity (e.g., a mobile phone network, Wi-Fi^{®}, Bluetooth^{®}). The processing device 500 may also include one or more storage devices 520 (e.g., non-volatile storage). Other configurations may also be employed.

The processing device 500 further includes a power supply 516, which is powered by one or more batteries or other power sources and which provides power to other components of the processing device 500. The power supply 516 may also be connected to an external power source (not shown) that overrides or recharges the built-in batteries or other power sources.

The processing device 500 may include a variety of tangible computer-readable storage media and intangible computer-readable communication signals. Tangible computer-readable storage can be embodied by any available media that can be accessed by the processing device 500 and includes both volatile and nonvolatile storage media, removable and non-removable storage media. Tangible computer-readable storage media excludes intangible and transitory communications signals and includes volatile and nonvolatile, removable, and non-removable storage media implemented in any method or technology for storage of information such as computer readable instructions, data structures, program modules or other data. Tangible computer-readable storage media includes RAM, read-only memory (ROM), electrically erasable programmable read-only memory (EEPROM), flash memory or other memory technology, CDROM, digital versatile disks (DVD) or other optical disk storage, magnetic cassettes, magnetic tape, magnetic disk storage or other magnetic storage devices, or any other tangible medium which can be used to store the desired information, and which can be accessed by the processing device 500. In contrast to tangible computer-readable storage media, intangible computer-readable communication signals may embody computer readable instructions, data structures, program modules or other data resident in a modulated data signal, such as a carrier wave or other signal transport mechanism. The term "modulated data signal" means a signal that has one or more of its characteristics set or changed in such a manner as to encode information in the signal. By way of example, intangible communication signals include wired media such as a wired network or direct-wired connection, and wireless media such as acoustic, radio frequency (RF), infrared and other wireless media.

Some implementations may comprise an article of manufacture. An article of manufacture may comprise a tangible storage medium (a memory device) to store logic. Examples of a storage medium may include one or more types of processor-readable storage media capable of storing electronic data, including volatile memory or non-volatile memory, removable or non-removable memory, erasable or non-erasable memory, writeable or re-writeable memory, and so forth. Examples of the logic may include various software elements, such as software components, programs, applications, computer programs, application programs, system programs, machine programs, operating system software, middleware, firmware, software modules, routines, subroutines, operation segments, methods, procedures, software interfaces, application program interfaces (API), instruction sets, computing code, computer code, code segments, computer code segments, words, values, symbols, or any combination thereof. In one implementation, for example, an article of manufacture may store executable computer program instructions that, when executed by a computer, cause the computer to perform methods and/or operations in accordance with the described implementations. The executable computer program instructions may include any suitable type of code, such as source code, compiled code, interpreted code, executable code, static code, dynamic code, and the like. The executable computer program instructions may be implemented according to a predefined computer language, manner, or syntax, for instructing a computer to perform a certain operation segment. The instructions may be implemented using any suitable high-level, low-level, object-oriented, visual, compiled and/or interpreted programming language.

In some aspects, the techniques described herein relate to a method of transferring a guest virtual machine (VM) from a source node to a target node, the method including: on the target node, allocating a set of resources to be used by the guest VM, the set of resources including a designated system memory for the guest VM; on a transfer node, reserving a shared physical memory region that is to facilitate transfer of the guest VM from the source node to the target node, the shared physical memory region being part of a shared memory pool that is memory coherent and cache coherent with both the source node and the target node; while the guest VM is running on the source node, re-mapping VM system memory of the guest VM from a first physical memory region on the source node to the shared physical memory region on the transfer node; following the re-mapping, begin copying system memory of the guest VM from the first physical memory region on the source node to the shared physical memory region on the transfer node; on the target node, mapping the designated system memory to the shared physical memory region on the transfer node; stopping the guest VM on the source node; and resuming the guest VM on the target node.

In some aspects, the techniques described herein relate to a method, wherein mapping the designated system memory to the shared physical memory region is performed before stopping the guest VM.

In some aspects, the techniques described herein relate to a method, wherein stopping the guest VM on the source node and resuming of the guest VM on the target node are performed substantially concurrent to one another.

In some aspects, the techniques described herein relate to a method, therein the transfer node includes a multi-port switch controller coupled to the target node and the source node.

In some aspects, the techniques described herein relate to a method, wherein the transfer node, the target node, and the source node all reside in a same rack.

In some aspects, the techniques described herein relate to a method, wherein the source node is in a different rack than the target node and wherein mapping the designated system memory to the shared physical memory region is performed after stopping the guest VM on the source node and subsequent to completion of the copying of the system memory from the first physical memory region on the source node to the shared physical memory region on the transfer node.

In some aspects, the techniques described herein relate to a method, wherein the designated system memory on the target node is defined by a set of logical addresses and wherein allocating the set of resources on the target node further includes creating a memory map on the target node that maps the set of logical addresses to a local memory region on the target node, and wherein mapping the designated system memory to the shared physical memory region further includes re-mapping the set of logical addresses from the local memory region on the target node to the shared physical memory region.

In some aspects, the techniques described herein relate to a method, further including: subsequent to completion of the copying of the system memory of the guest VM from the first physical memory region on the source node to the shared physical memory region on the transfer node, begin copying the system memory from the shared physical memory region on the transfer node to the local memory region on the target node; and re-mapping the set of logical addresses of the designated system memory from the shared physical memory region to the local memory region on the target node.

In some aspects, the techniques described herein relate to a system including: a software component configured to: allocate a set of resources to a guest virtual machine (VM), the set of resources including a designated system memory for the guest VM that is to receive a system memory of the guest VM during an inter-node transfer of the guest VM; and reserve a shared physical memory region on a transfer node that includes a multi-port switch controller that couples to other nodes on a network and that provides the other nodes with cache coherency and shared memory access to the shared physical memory region; and a source node that hosts the guest VM prior to the inter-node transfer, the source node being configured to: re-map VM system memory of the guest VM from a first physical memory region on the source node to the shared physical memory region on the transfer node; and copy the VM system memory of the guest VM from the first physical memory region on the source node to the shared physical memory region on the transfer node; and a target node that hosts a target VM allocated the designated system memory, the designated system memory being mapped, at least temporarily, to the shared physical memory region.

In some aspects, the techniques described herein relate to a system, wherein target node maps the designated system memory to the shared physical memory region before the guest VM stops running on the source node and starts running on the target node.

In some aspects, the techniques described herein relate to a system, wherein the source node stops running the guest VM at a first time substantially concurrent to a second time that the target node starts running the guest VM.

In some aspects, the techniques described herein relate to a system, wherein the multi-port switch controller of the transfer node is coupled to the target node and the source node, and wherein the target node are memory coherent and cache coherent with the transfer node.

In some aspects, the techniques described herein relate to a system, wherein the transfer node, the target node, and the source node all reside in a same rack.

In some aspects, the techniques described herein relate to a system, wherein the source node is in a different rack than the target node and wherein the target node is configured to map the designated system memory to the shared physical memory region is after the guest VM stops running on the source node and after the source node finishing copying the system memory from the first physical memory region on the source node to the shared physical memory region on the transfer node.

In some aspects, the techniques described herein relate to a system, wherein the target node is configured to resume the guest VM after the guest VM is stopped on the host and after final transfer of dirty source memory pages from a write cache of the source node to the shared physical memory region.

In some aspects, the techniques described herein relate to a system, wherein the target node is further configured to: copy the system memory from the shared physical memory region on the transfer node to a local memory region on the target node; and re-map the designated system memory from the shared physical memory region to the second physical memory region subsequent to completing the copying of the system memory from the shared physical memory region to the local memory region.

In some aspects, the techniques described herein relate to one or more tangible storage media storing processor-readable instructions for executing a computer process for transferring a guest virtual machine (VM) from a source node to a target node, the computer process including: allocating a set of resources to the guest VM on the target node, the set of resources including a designated system memory for the guest VM; while the guest VM is running on the source node, re-mapping VM system memory of the guest VM from a first physical memory region on the source node to a shared physical memory region on a transfer node, the shared physical memory region being part of a shared memory pool that is memory coherent and cache coherent with both the source node and the target node; copying the VM system memory of the guest VM from the first physical memory region on the source node to the shared physical memory region on the transfer node; mapping the designated system memory on the target node to the shared physical memory region on the transfer node; and stopping the guest VM on the source node; and resuming the guest VM on the target node.

In some aspects, the techniques described herein relate to one or more tangible storage media, wherein the transfer node includes a multi-port switch controller physically coupled to the target node and the source node.

In some aspects, the techniques described herein relate to one or more tangible storage media, wherein the computer process further includes: subsequent to completion of the copying of the system memory of the guest VM from the first physical memory region on the source node to the shared physical memory region on the transfer node, copying the system memory from the shared physical memory region on the transfer node to a second physical memory region on the target node; and re-mapping the designated system memory from the shared physical memory region to the second physical memory region.

In some aspects, the techniques described herein relate to one or more tangible storage media, wherein mapping the designated system memory on the target node to the shared physical memory region on the transfer node is performed before stopping the guest VM on the source node and the computer process further includes: stopping the guest VM on the source node at a first time that is substantially concurrent to a second time that the guest VM is started on the target node.

The logical operations described herein are implemented as logical steps in one or more computer systems. The logical operations may be implemented (1) as a sequence of processor-implemented steps executing in one or more computer systems and (2) as interconnected machine or circuit modules within one or more computer systems. The implementation is a matter of choice, dependent on the performance requirements of the computer system being utilized. Accordingly, the logical operations making up the implementations described herein are referred to variously as operations, steps, objects, or modules. Furthermore, it should be understood that logical operations may be performed in any order, unless explicitly claimed otherwise or a specific order is inherently necessitated by the claim language. The above specification, examples, and data, together with the attached appendices, provide a complete description of the structure and use of exemplary implementations.

## Claims

1. A method of transferring a guest virtual machine "VM" (201) (110) from a source node (404) (304) to a target node (408) (308), the method comprising:
on the target node (408) (308), allocating a set of resources to be used by the guest VM (110) (201), the set of resources including a designated system (200) (100) memory (504) (232) for the guest VM (110) (201);
on a transfer node (406) (306) (206) (106), reserving a shared physical memory (504) region (234) that is to facilitate transfer of the guest VM (110) (201) from the source node (404) (304) to the target node (408) (308), the shared physical memory (504) region (234) being part of a shared memory (504) pool (208) (108) that is memory (504) coherent and cache coherent with both the source node (404) (304) and the target node (408) (308);
while the guest VM (110) (201) is running on the source node (404) (304), re-mapping VM (110) system (200) (100) memory (504) of the guest VM (110) (201) from a first physical memory (504) region on the source node (404) (304) to the shared physical memory (504) region (234) on the transfer node (406) (306) (206) (106);
following the re-mapping, begin copying system (200) (100) memory (504) of the guest VM (110) (201) from the first physical memory (504) region on the source node (404) (304) to the shared physical memory (504) region (234) on the transfer node (406) (306) (206) (106);
on the target node (408) (308), mapping the designated system (200) (100) memory (504) (232) to the shared physical memory (504) region (234) on the transfer node (406) (306) (206) (106);
stopping the guest VM (110) (201) on the source node (404) (304); and
resuming the guest VM (110) (201) on the target node (408) (308).

2. The method of claim 1, wherein mapping the designated system memory to the shared physical memory region is performed before stopping the guest VM.

3. The method of claim 2, wherein stopping the guest VM on the source node and resuming of the guest VM on the target node are performed substantially concurrent to one another.

4. The method of any preceding claim, wherein the transfer node includes a multi-port switch controller coupled to the target node and the source node.

5. The method of any preceding claim, wherein the transfer node, the target node, and the source node all reside in a same rack.

6. The method of any preceding claim, wherein the source node is in a different rack than the target node and wherein mapping the designated system memory to the shared physical memory region is performed after stopping the guest VM on the source node and subsequent to completion of the copying of the system memory from the first physical memory region on the source node to the shared physical memory region on the transfer node.

7. The method of any preceding claim, wherein the designated system memory on the target node is defined by a set of logical addresses and wherein allocating the set of resources on the target node further comprises creating a memory map on the target node that maps the set of logical addresses to a local memory region on the target node, and
wherein mapping the designated system memory to the shared physical memory region further comprises re-mapping the set of logical addresses from the local memory region on the target node to the shared physical memory region.

8. The method of claim 7, further comprising:
subsequent to completion of the copying of the system memory of the guest VM from the first physical memory region on the source node to the shared physical memory region on the transfer node, begin copying the system memory from the shared physical memory region on the transfer node to the local memory region on the target node; and
re-mapping the set of logical addresses of the designated system memory from the shared physical memory region to the local memory region on the target node.

9. A system (200) (100) comprising:
a software component configured to:
allocate a set of resources to a guest virtual machine "VM" (110), the set of resources including a designated system (200) (100) memory (504) (232) for the guest VM (110) (201) that is to receive a system (200) (100) memory (504) of the guest VM (110) (201) during an inter-node transfer of the guest VM (110) (201); and
reserve a shared physical memory (504) region (234) on a transfer node (406) (306) (206) (106) that includes a multi-port switch controller (204) (104) that couples to other nodes on a network and that provides the other nodes with cache coherency and shared memory (504) access to the shared physical memory (504) region (234); and
a source node (404) (304) that hosts the guest VM (110) (201) prior to the inter-node transfer, the source node (404) (304) being configured to:
re-map VM (110) system (200) (100) memory (504) of the guest VM (110) (201) from a first physical memory (504) region on the source node (404) (304) to the shared physical memory (504) region (234) on the transfer node (406) (306) (206) (106); and
copy the VM (110) system (200) (100) memory (504) of the guest VM (110) (201) from the first physical memory (504) region on the source node (404) (304) to the shared physical memory (504) region (234) on the transfer node (406) (306) (206) (106); and
a target node (408) (308) that hosts a target VM (110) (222) allocated the designated system (200) (100) memory (504) (232), the designated system (200) (100) memory (504) (232) being mapped, at least temporarily, to the shared physical memory (504) region (234).

10. The system of claim 9, wherein target node maps the designated system memory to the shared physical memory region before the guest VM stops running on the source node and starts running on the target node.

11. The system of claim 9 or claim 10, wherein the multi-port switch controller of the transfer node is coupled to the target node and the source node, and wherein the target node are memory coherent and cache coherent with the transfer node.

12. The system of any of claims 9 to 11, wherein the source node is in a different rack than the target node and wherein the target node is configured to map the designated system memory to the shared physical memory region is after the guest VM stops running on the source node and after the source node finishing copying the system memory from the first physical memory region on the source node to the shared physical memory region on the transfer node.

13. The system of any of claims 9 to 12, wherein the target node is configured to resume the guest VM after the guest VM is stopped on the host and after final transfer of dirty source memory pages from a write cache of the source node to the shared physical memory region.

14. The system of claim 13, wherein the target node is further configured to:
copy the system memory from the shared physical memory region on the transfer node to a local memory region on the target node; and
re-map the designated system memory from the shared physical memory region to the second physical memory region subsequent to completing the copying of the system memory from the shared physical memory region to the local memory region.

15. One or more tangible storage media storing processor-readable instructions for executing a computer process for transferring a guest virtual machine "VM" (110) from a source node (404) (304) to a target node (408) (308), the computer process comprising:
allocating a set of resources to the guest VM (110) (201) on the target node (408) (308), the set of resources including a designated system (200) (100) memory (504) (232) for the guest VM (110) (201);
while the guest VM (110) (201) is running on the source node (404) (304), re-mapping VM (110) system (200) (100) memory (504) of the guest VM (110) (201) from a first physical memory (504) region on the source node (404) (304) to a shared physical memory (504) region (234) on a transfer node (406) (306) (206) (106), the shared physical memory (504) region (234) being part of a shared memory (504) pool (208) (108) that is memory (504) coherent and cache coherent with both the source node (404) (304) and the target node (408) (308);
copying the VM (110) system (200) (100) memory (504) of the guest VM (110) (201) from the first physical memory (504) region on the source node (404) (304) to the shared physical memory (504) region (234) on the transfer node (406) (306) (206) (106);
mapping the designated system (200) (100) memory (504) (232) on the target node (408) (308) to the shared physical memory (504) region (234) on the transfer node (406) (306) (206) (106); and
stopping the guest VM (110) (201) on the source node (404) (304); and
resuming the guest VM (110) (201) on the target node (408) (308).
